Europäisches Patentamt

European Patent Office

Office européen des brevets

(19)

(11) Numéro de publication: **0 537 081 B1**

(12)

# FASCICULE DE BREVET EUROPEEN

(45) Date de publication du fascicule du brevet: **06.12.95**   (51) Int. Cl.[6]: **B60L 11/18**

(21) Numéro de dépôt: **92402775.8**

(22) Date de dépôt: **09.10.92**

---

(54) **Système de contrôle de l'énergie d'une batterie d'alimentation d'un moteur électrique de traction d'un véhicule.**

---

(30) Priorité: **11.10.91 FR 9112576**

(43) Date de publication de la demande:
**14.04.93 Bulletin 93/15**

(45) Mention de la délivrance du brevet:
**06.12.95 Bulletin 95/49**

(84) Etats contractants désignés:
**DE GB IT**

(56) Documents cités:
**EP-A- 0 280 916**
**EP-A- 0 448 755**
**DE-A- 3 142 038**
**GB-A- 2 147 108**
**US-A- 4 820 966**

(73) Titulaire: **AUTOMOBILES PEUGEOT**
**75, Avenue de la Grande-Armée**
**F-75116 Paris (FR)**

Titulaire: **AUTOMOBILES CITROEN**
**62, Boulevard Victor-Hugo**
**F-92200 Neuilly-sur-Seine (FR)**

(72) Inventeur: **Dequenne, Michel**
**10 Rue de la belle épine**
**F-78650 Beynes (FR)**

(74) Mandataire: **Thinat, Michel et al**
**Cabinet Weinstein,**
**20 Avenue de Friedland**
**F-75008 Paris (FR)**

EP 0 537 081 B1

---

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

Rank Xerox (UK) Business Services
(3.10/3.09/3.3.3)

## Description

La présente invention concerne un système de contrôle de l'énergie d'une batterie d'alimentation d'un moteur électrique de traction d'un véhicule.

On connaît un procédé permettant de capitaliser la quantité d'énergie d'une batterie basé sur le principe de l'équation :

$$Q = It$$

où :

Q = quantité d'électricité en coulomb (ou en ampère heure)

I = Courant en ampère

t = temps (heure)

Une mesure des courants de charge et de décharge de la batterie permet ainsi de déterminer d'une manière théorique les quantités d'électricité de charge et de décharge et d'afficher ces quantités de façon analogue à une jauge de carburant.

Cependant, cette méthode connue ne permet pas une mesure précise de l'état réel de la charge disponible de la batterie.

La publication DE-A-3 142 038 décrit un système de contrôle de l'énergie d'une batterie d'alimentation d'un moteur électrique de traction d'un véhicule piloté par un circuit de puissance ou de régulation, tel qu'un circuit hacheur, comprenant un dispositif de mesure de la tension et des courants de charge et décharge de la batterie et de détermination, à partir de la tension et des courants mesurés, de la quantité d'électricité stockée dans la batterie et un dispositif d'affichage analogue à une jauge de carburant, le dispositif de mesure, qui comporte de plus un circuit mesurant en permanence la tension de la batterie, étant adapté pour déterminer à chaque instant la quantité d'énergie disponible et l'afficher, et également pour déterminer à chaque instant la distance réelle restant à parcourir sans recharge de la batterie et l'afficher.

Ainsi, le système est capable de connaître à tout moment la distance exacte que peut parcourir le véhicule suivant l'état de charge de la batterie du véhicule, y compris pendant la phase recharge du véhicule.

L'invention est caractérisée en ce que dans des conditions initiales, le dispositif de mesure et de détermination détermine également la quantité d'énergie nécessaire pour parcourir un trajet de consigne choisi par le conducteur et qui est visualisée au dispositif d'affichage, compare cette quantité d'énergie à la quantité d'énergie stockée dans la batterie et commande le circuit de régulation du moteur électrique de façon à limiter la puissance fournie au moteur électrique à un niveau déterminé lorsque la quantité d'énergie nécessaire est relativement proche de la quantité d'énergie stockée.

De préférence, le dispositif de mesure et de détermination précité comprend un microprocesseur relié au dispositif d'affichage et deux circuits d'intégration, l'un du courant de charge de la batterie et l'autre du courant de décharge de la batterie, reliés respectivement à trois entrées du microprocesseur qui mémorise, à des intervalles variables, les valeurs de sortie des circuits d'intégration qui sont alors réinitialisés, le microprocesseur capitalisant au bout d'un certain temps les valeurs mémorisées pour déterminer la quantité d'énergie réellement disponible de la batterie.

Avantageusement, le système comprend de plus un clavier de contrôle relié au microprocesseur permettant de transmettre à ce dernier la valeur du trajet de consigne qui est mémorisée dans le microprocesseur lequel commande le dispositif d'affichage pour visualiser une valeur de puissance, limitée ou non, à fournir au moteur électrique suivant la valeur du trajet de consigne et qui est validée par le conducteur à l'aide du clavier de contrôle.

En présence d'aucune information transmise par le clavier, le dispositif se réinitialise avec les derniers paramètres conservés en mémoire (par exemple, trajet interrompu ou repris)

Le système comprend également un capteur de vitesse du véhicule relié à travers un circuit de mise en forme à une entrée de comptage du microprocesseur.

Le dispositif de mesure de la tension de la batterie est relié à travers un circuit à une entrée analogique du microprocesseur.

Les valeurs des courants de charge et de décharge sont mesurées à partir d'une résistance de shunt en série avec la batterie et dont les valeurs de tensions correspondantes sont transmises aux deux circuits d'intégration à travers un circuit d'amplification et de séparation des composantes de tension positives et négatives.

Avantageusement, le dispositif d'affichage comprend deux lignes ou rampes lumineuses situées sur le tableau de bord du véhicule et visualisant respectivement la quantité d'énergie stockée dans la batterie et la quantité d'énergie nécessaire pour terminer le trajet de consigne choisi.

L'invention sera mieux comprise, et d'autres buts, caractéristiques, détails et avantages de celle-ci apparaîtront plus clairement au cours de la description explicative qui va suivre faite en référence aux dessins schématiques annexés donnés uniquement à titre d'exemple illustant un mode de réalisation de l'invention, et dans lesquels :

La figure 1 représente un schéma synoptique fonctionnel du système conforme à l'invention.

La figure 2 représente l'ensemble dispositif d'affichage et clavier de contrôle monté sur le tableau de bord d'un véhicule.

La figure 3 représente le principe de mesure de la quantité d'électricité d'une batterie suivant l'invention.

La figure 4 représente un schéma détaillé du système de contrôle de l'invention.

La figure 5 représente un signal de sortie d'un circuit d'intégration utilisé dans le système de l'invention.

En se reportant aux figures, la référence 1 désigne une batterie d'alimentation d'un moteur électrique 2 de traction d'un véhicule automobile piloté par un circuit de puissance ou de régulation 3, tel qu'un circuit hacheur, relié en série avec le moteur 2 aux bornes de la batterie 1.

Le système de contrôle de l'énergie de la batterie 1 comprend un dispositif 4 de mesure de courants de charge, de décharge et de la tension de batterie 1 et de détermination, à partir des courants et de la tension mesurés, de la quantité d'électricité stockée dans la batterie représentative de la distance maximale que peut parcourir le véhicule et un dispositif 5 d'affichage de la quantité d'énergie stockée dans la batterie.

Selon l'invention, le dispositif 4 de mesure et de détermination est adapté pour déterminer à tout instant la distance exacte, par exemple en kilomètres, que peut parcourir le véhicule suivant l'état de la charge de la batterie 1 et afficher au dispositif d'affichage 5 la quantité d'énergie correspondante de la batterie.

A cet effet, le dispositif de mesure et de détermination 4 comprend un microprocesseur 6 ayant deux entrées analogiques e1 et e2 reliées respectivement aux sorties de deux circuits d'intégration 7 et 8, une troisième entrée e3 reliée à un circuit 14 fournissant la tension vb de la batterie d'une façon qui sera expliquée plus loin, une quatrième entrée e4 reliée également en sortie du circuit d'intégration 8 et une sortie S1 de commande de réinitialisation ou de remise à zéro de chacun des deux circuits d'intégration 7, 8. Le circuit d'intégration 7 effectue l'intégration du courant de charge de la batterie 1 tandis que le circuit d'intégration 8 effectue l'intégration du courant de décharge de cette batterie. Les valeurs des courants de charge et de décharge de la batterie 1 sont prélevées à partir, par exemple, d'une résistance de shunt 9 reliée en série avec la batterie 1 et ayant sa borne opposée à celle reliée à la batterie reliée à l'une des bornes d'alimentation du moteur électrique 2. Le courant circulant à travers la résistance de shunt 9 a un sens suivant que la batterie est en charge comme cela est la cas par exemple lorsque la batterie est rechargée par un dispositif rechargeur 10 ou se décharge lorsque le véhicule est en service ou se déplace. Les tensions qui correspondent aux courants de charge et de décharge circulant à travers la résistance de shunt 9 sont appliquées à l'entrée d'un circuit d'amplification 11 dont la sortie est reliée à l'entrée d'un circuit 12 de séparation des composantes de tension positives et négatives de la tension mesurée aux bornes de la résistance de shunt 9. Le circuit 12 a ses deux sorties reliées respectivement aux deux entrées des circuits d'intégration 7 et 8. De plus, les entrées e1, e2, e3 et e4 correspondent respectivement aux entrées de trois convertisseurs analogique-numérique internes au microprocesseur 6 qui est par exemple celui connu sous la dénomination 68 HC 11 de MOTOROLA.

Le système comprend de plus un clavier de contrôle 13 relié unidirectionnellement à l'entrée e5 du microprocesseur 6 et dont la fonction sera expliquée ultérieurement. La sortie s2 du microprocesseur 6 est reliée unidirectionnellement au dispositif d'affichage 5.

Le microprocesseur 6 a également une entrée e3 analogique à laquelle est appliquée, à travers un circuit 14 d'adaptation et d'isolement galvanique, un signal représentatif de la tension Vb de la batterie. L'entrée e3 correspond à une entrée d'un des quatre convertisseurs analogique-numérique du microprocesseur 6. L'entrée e6 du microprocesseur 6 est reliée, à travers un circuit de mise en forme 15, à un capteur 16 de vitesse du véhicule. Le capteur 16, par exemple du type opto-électronique, fournit à l'entrée de comptage e6 du microprocesseur 6 un signal constitué par 4 tops par mètre de déplacement détecté du véhicule. Le microprocesseur 6 produit également sur sa sortie s3 un signal de commande du circuit de régulation 3 de façon, si nécessaire, à limiter la puissance à fournir au moteur électrique 2 comme cela sera expliqué ultérieurement. Un circuit 17 de contrôle d'alimentation d'une batterie auxiliaire, par exemple de 12 volts servant aux commandes générales du véhicule est relié à l'entrée e7 du microprocesseur 6. Plus précisémment, à la coupure de la clé de contact, le circuit 17 fournit à l'entrée e7 du microprocesseur 6 un signal indicatif d'une demande de mise hors service du véhicule 7 par le conducteur. A cet instant, le microprocesseur 6 sauvegarde les données courantes de sa mémoire vive dans une mémoire permanente et fournit sur sa sortie s4 un signal de commande de coupure de l'alimentation. Enfin, le microprocesseur 6 comporte deux autres entrées e8 et e9 recevant respectivement des signaux relatifs au chauffage de l'habitacle du véhicule et à la température extérieure de celui-ci.

Le fonctionnement du système de l'invention ressort déjà en partie de la description qui en a été faite ci-dessus et va être maintenant détaillé.

Lorsque le système de contrôle est mis en service avant que le conducteur utilise le véhicule, le dispositif d'affichage 5 sous la commande du microprocesseur 6 visualise sur une ligne lumineuse supérieure 5a ou rampe lumineuse, constituée de petits rectangles ou pavés, la quantité d'énergie stockée dans la batterie 1 ainsi que la distance ou autonomie maximale correspondante, en kilomètres, que peut parcourir le véhicule affichée numériquement à gauche de la rampe lumineuse 5a (à titre d'exemple de 100 kms). L'ensemble des pavés de la rampe 5a forme en quelque sorte une jauge de carburant semblable à celle présente sur un véhicule à combustible traditionnel. Le microprocesseur 6 affiche cette valeur d'autonomie maximale en tenant compte bien entendu, à la mise en route du véhicule et avant que celui-ci roule, de certains paramètres prévisionnels, comme par exemple la détection de demande de chauffage électrique de l'habitacle du véhicule, une telle fonction ayant un effet direct sur l'autonomie maximale du véhicule.

Ensuite, et toujours avant que le véhicule roule, le conducteur peut choisir à l'aide de touches 13a et 13b du clavier de contrôle 13 la longueur du trajet qu'il compte parcourir. Les deux touches 13a et 13b servent respectivement à incrémenter et décrémenter la valeur de la distance en kilomètres qui sera à couvrir et qui est affichée numériquement au dispositif d'affichage 5 à gauche d'une ligne ou rampe lumineuse 5b en dessous de la rampe 5a et également constituée d'une rangée de pavés.

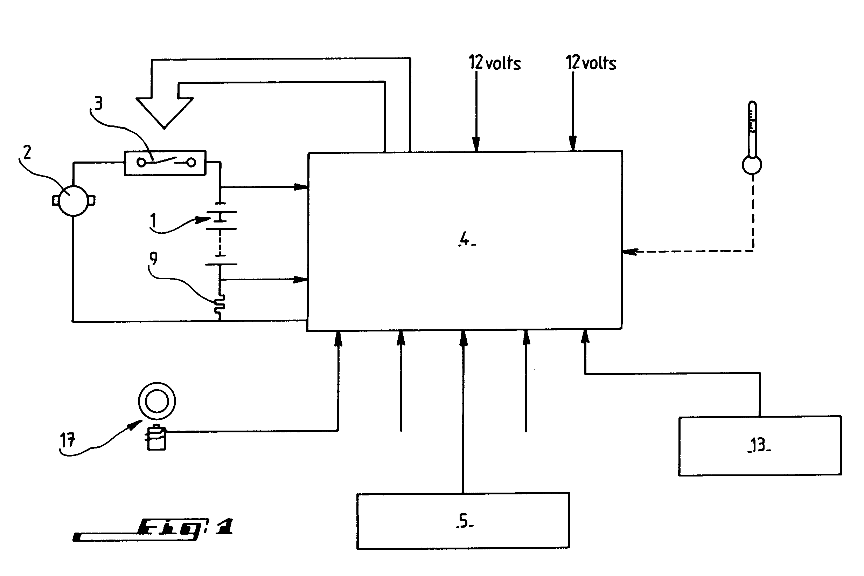

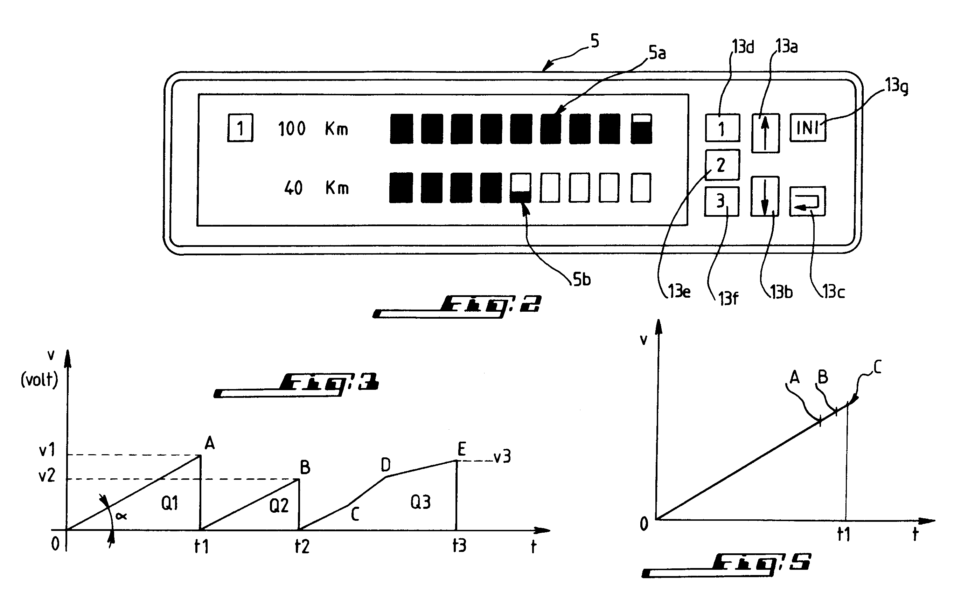

Lorsque la valeur de distance de consigne est affichée, celle-ci est validée par le conducteur à l'aide de la touche 13c du clavier 13. A cet instant, le microprocesseur 6 effectue une série de calculs qui détermine tout d'abord la quantité d'énergie de la batterie 1 nécessaire pour que le véhicule puisse parcourir le trajet demandé, quantité d'énergie qui est affichée à la rampe lumineuse 5b du dispositif d'affichage 5. Ensuite, le microprocesseur 6 compare la quantité d'énergie nécessaire calculée à la quantité d'énergie stockée dans la batterie 1. Si la quantité d'énergie nécessaire est relativement proche de la quantité d'énergie stockée, le microprocesseur 6 fournit sur sa sortie s3 un signal appliqué au circuit de régulation 3 de manière qu'il limite la puissance du moteur électrique 2 suivant la quantité d'énergie disponible. A titre d'exemple, deux valeurs de limitation de puissance sont proposées, l'une correspondant à une consommation d'énergie de 120 Wh par km symbolisée par le chiffre 1 affiché complètement à gauche de la rampe lumineuse 5a en figure 2, l'autre correspondant à une consommation d'énergie d'environ 140 Wh par km symbolisée par le chiffre 2. Si la quantité d'énergie stockée, représentée sur la rampe 5a, est beaucoup plus grande que l'énergie nécessaire calculée pour effectuer le trajet, aucune limitation de puissance n'est nécessaire et le dispositif d'affichage 5 affichera le chiffre 3 complètement à gauche de la rampe d'affichage 5a correspondant à une consommation d'énergie par exemple d'environ 160 Wh par km. Le conducteur, selon le chiffre affiché plus haut à gauche de la rampe d'affichage 5a validera la puissance proposée, limitée ou non, en appuyant sur l'une des trois touches correspondantes 13d, 13e et 13f du clavier 13 de façon que le microprocesseur 6 envoie un ordre de commande correspondant au circuit de régulation 3. La touche 13g sert d'initialisation des données de consigne introduites dans le microprocesseur 6.

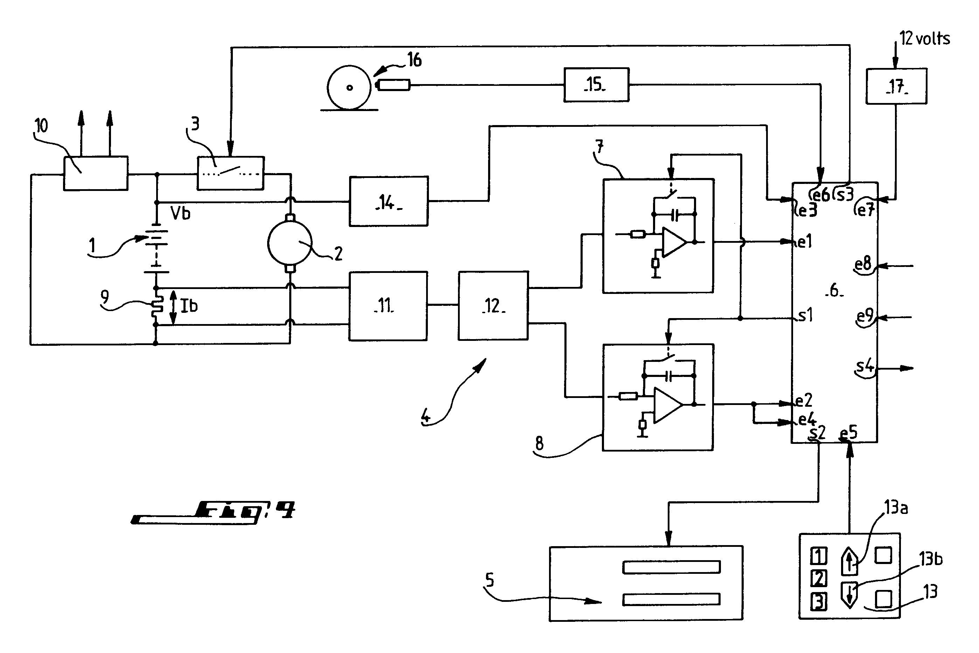

Le conducteur peut alors utiliser son véhicule. Le dispositif de mesure et de détermination 4 est adapté pour déterminer à tout instant de déplacement du véhicule la distance en kilomètres que peut parcourir celui-ci suivant l'état de charge de la batterie 1. Le principe de mesure de la quantité d'électricité de charge et de décharge de la batterie va être expliqué en référence à la figure 3. Le courant Ib circulant dans la batterie 1 est mesuré au travers de la résistance de shunt 9 ou d'un circuit de mesure à effet Hall à partir de la tension aux bornes de cette résistance et qui est appliquée aux circuits d'intégration 7, 8 dont la sortie de chacun produit un signal en forme de rampe appliqué à l'entrée e1 ou e2 du microprocesseur 6. Comme représenté en figure 3, plus le courant, et donc la tension, sera important, plus l'angle représenté sera important. Au bout d'un instant t1, déterminé par le microprocesseur 6, la valeur de tension de crête V1 du signal de rampe du circuit d'intégration 7 ou 8 est mémorisée dans une mémoire correspondante du microprocesseur 6. Au même instant t1, le microprocesseur 6 initialise ou remet à zéro le circuit d'intégration 7 ou 8. A un autre instant t2, toujours déterminé par le microprocesseur 6 et qui peut être différent de l'instant t1, une nouvelle valeur de tension de crête V2 du signal de rampe du circuit d'intégration 7 ou 8 est mémorisée dans le microprocesseur 6 et au même instant t2, le microprocesseur 6 initialise le circuit d'intégration 7 ou 8. Ce processus de mémorisation de tension de crête et d'initialisation des circuits d'intégration 7, 8 se poursuit jusqu'à un temps tn. Le microprocesseur 6 stocke ainsi des quantités d'électricité variables en amplitude et en temps. Le microprocesseur 6 effectue ensuite la somme

4

des quantités d'électricité calculées et mémorisées suivant la formule ci-dessus :

$$Qn = \int_{0}^{t1} i\ dt + \int_{t1}^{t2} i\ dt + \int_{t2}^{t3} i\ dt + ... + \int_{tn-1}^{tn} i\ dt$$

Ainsi, le microprocesseur 6 calcule la somme des quantités d'électricité stockées au bout d'un temps tn représentative de la quantité d'électricité réelle de la batterie correpondant à une distance réelle restant à parcourir au véhicule sur le trajet de consigne choisi par le conducteur, distance qui est bien entendu déterminée en tenant compte de paramètres transmis au microprocesseur 6, tels que la vitesse de déplacement du véhicule, le chauffage de l'habitacle et la tension de la batterie permettant de calculer les watts heure stockés comparés aux watts heure/km estimés nécessaires. Une particularité du microprocesseur 6 est à signaler à l'égard de la mesure des courants de décharge. En effet, comme déjà expliqué en partie ci-dessus, les deux signaux de rampe fournis par les circuits d'intégration 7 et 8 attaquent trois convertisseurs analogique-numérique intégrés dans le microprocesseur 6, dans lequels convertisseurs, ainsi que le quatrième convertisseur analogique-numérique recevant le signal de sortie du circuit 14, sont commandés à des moments différents par le programme intégré dans le microprocesseur 6. Dans la mesure où au moment t1, t2..., ou tn de commande de remise à zéro des circuits d'intégration 7, 8, le microprocesseur 6 ne peut déterminer lequel convertisseur analogique-numérique avait acquis la dernière valeur de crête maximale du signal de rampe du circuit d'intégration 8 symbolisée par le point C à la figure 5, les deux convertisseurs analogique-numérique utilisés dans la voie de mesure des courants de décharge, branchés ensemble électriquement et commandés à des moments différents par le programme intégré dans le microprocesseur 6, permettent d'affiner la mesure des courants de décharge. En effet, comme le microprocesseur 6 effectue les conversions analogique-numérique suivant un ordre précis, par exemple la conversion commence à l'entrée e1 et se termine à l'entrée e4 en passant successivement par les entrées e2 et e3, les convertisseurs travaillant d'un manière asynchrone, le microprocesseur 6 est adapté pour prélever simultanément les valeurs des deux convertisseurs analogique-numérique de la voie de mesure des courants de décharge et prendre en considération la plus grande des deux façon à diminuer ainsi l'erreur de mesure. Grâce à ce procédé, l'erreur maximale sur la valeur de tension de crête maximum C que l'on cherche à stocker est inférieure à 0,5%. On notera par ailleurs qu'entre deux intervalles de mesure du courant circulant dans la batterie, le signal de rampe en sortie de chaque circuit d'intégration 7, 8 n'est pas nécessairement linéaire mais peut changer comme cela est représenté en figure 3 entre les temps t2 et t3. Une fois les calculs ci-dessus effectués, le microprocesseur 6 commandera le dispositif d'affichage 5 de façon que la rampe 5b affiche la quantité d'énergie de la batterie nécessaire pour terminer le trajet et que la distance réelle qui restera à parcourir au véhicule soit également affichée à gauche de la rampe 5b (par exemple 40 kms). Si la quantité d'énergie calculée est insuffisante pour couvrir la distance restant à parcourir, le microprocesseur 6 commande alors le circuit de régulation 3 pour qu'il limite la puissance de traction du moteur électrique 2 comme expliqué précédemment.

Le microprocesseur 6 du dispositif 4, pendant la recharge de la batterie 1 par le dispositif rechargeur 10, est également adapté pour afficher à tout instant, par un calcul approprié, la distance que pourrait couvrir le véhicule si l'on passait directement du cycle de recharge de la batterie au cycle de roulage de celui-ci. Bien entendu, des corrections sur la quantité d'énergie nécessaire pour couvrir un trajet déterminé peuvent être apportées lorsque la recharge de la batterie est incomplète et que le véhicule doit rouler immédiatement ou lorsque le véhicule se trouve à l'arrêt pendant des durées qui seront prises en considération. Par ailleurs, à la mise en route du véhicule, si le conducteur n'effectue aucune action sur les différentes touches de commande du clavier de contrôle 13, le microprocesseur 6 utilisera les dernières valeurs de consigne stockées en permanence dans sa mémoire.

Le système de l'invention tel que cela ressort de la description qui en a été faite ci-dessus n'est pas qu'un simple appareil formant jauge de mesure habituelle et permet de plus de déterminer à tout instant la

**EP 0 537 081 B1**

distance exacte que peut parcourir un véhicule électrique suivant l'état de charge de la batterie de celui-ci en régime dynamique de fonctionnement du véhicule.

Bien entendu, diverses modifications peuvent être apportées au système sans sortir du cadre de l'invention tel que défini par les revendications. Ainsi, les quatres convertisseurs analogique-numérique peuvent être disposés entre les sorties des circuits 7, 8 et 14 et le microprocesseur 6 au lieu d'être dans ce dernier.

**Revendications**

1. Système de contrôle de l'énergie d'une batterie (1) d'alimentation d'un moteur électrique de traction (2) d'un véhicule piloté par un circuit de puissance ou de régulation (3), tel qu'un circuit hacheur, comprenant un dispositif (4) de mesure de courants de charge et décharge de la batterie (1) et de détermination, à partir des courants mesurés, de la quantité d'électricité stockée dans la batterie (1) et un dispositif d'affichage (5) analogue à une jauge de carburant, le dispositif de mesure (4), qui comporte de plus un circuit (14) mesurant en permanence la tension (vb) de la batterie (1), étant adapté pour déterminer à chaque instant la quantité d'énergie disponible et l'afficher, et également pour déterminer à chaque instant la distance réelle restant à parcourir sans recharge de la batterie et l'afficher, caractérisé en ce que, dans des conditions initiales, le dispositif de mesure et de détermination (4) détermine également la quantité d'énergie nécessaire pour parcourir un trajet de consigne choisi par le conducteur et qui est visualisée au dispositif d'affichage (5), compare cette quantité d'énergie à la quantité d'énergie stockée dans la batterie (1) et commande le circuit de régulation (3) du moteur électrique (2) de façon à limiter la puissance fournie au moteur électrique (2) à un niveau déterminé lorsque la quantité d'énergie nécessaire est relativement proche de la quantité d'énergie stockée.

2. Système selon la revendication 1, caractérisé en ce que le dispositif de mesure et de détermination (4) précité comprend un microprocesseur (6) relié au dispositif d'affichage (5) précité et deux circuits d'intégration (7, 8), l'un (7) du courant de charge de la batterie et l'autre (8) du courant de décharge de la batterie, reliés respectivement à trois entrées (e1, e2, e4) du microprocesseur (6) qui mémorise, à des intervalles variables, les valeurs de sortie des circuits d'intégration (7, 8) qui sont alors réinitialisés, le microprocesseur capitalisant au bout d'un certain temps (tn) les valeurs mémorisées pour déterminer la quantité d'énergie réellement disponible de la batterie (1).

3. Système selon la revendication 2, caractérisé en ce qu'il comprend un clavier de contrôle (13) relié au microprocesseur (6) permettant de transmettre à ce dernier la valeur du trajet de consigne qui est mémorisée dans le microprocesseur (6) lequel commande le dispositif d'affichage (5) pour visualiser une valeur de puissance, limitée ou non, à fournir au moteur électrique (2) suivant la valeur du trajet de consigne et qui est validée par le conducteur à l'aide du clavier de contrôle (13).

4. Système selon la revendication 2 ou 3, caractérisé en ce qu'il comprend un capteur de vitesse (16) du véhicule relié à travers un circuit de mise en forme à une entrée de comptage du microprocesseur (6).

5. Système selon l'une des revendications 2 à 4 caractérisé en ce que le dispositif de mesure de la tension (Vb) de la batterie est relié à travers un circuit (14) à une entrée analogique (e3) du microprocesseur (6).

6. Système selon l'une des revendications 2 à 5, caractérisé en ce que les valeurs des courants de charge et de décharge sont mesurées à partir d'une résistance de shunt (9) en série avec la batterie (1) et dont les valeurs de tension correspondantes sont transmises aux deux circuits d'intégration (7, 8) à travers un circuit d'amplification (11) et de séparation (12) des composantes de tension positives et négatives.

7. Système selon l'une des revendications précédentes, caractérisé en ce que le dispositif d'affichage (5) comprend deux lignes ou rampes lumineuses (5a, 5b) situées sur le tableau de bord du véhicule et visualisant respectivement la quantité d'énergie stockée dans la batterie (1) et la quantité d'énergie nécessaire pour terminer le trajet de consigne choisi précité.

EP 0 537 081 B1

8. Système selon l'une des revendications 2 à 7, caractérisé en ce que le microprocesseur (6) a deux (e2, e4) de ses entrées, qui correspondent respectivement aux deux entrées de deux convertisseurs analogique-numérique du microprocesseur (6), reliées en sortie du circuit d'intégration (8) et est adapté pour retenir la valeur de sortie du circuit d'intégration (8) la plus élevée des deux valeurs de sortie prélevées.

**Claims**

1. System for the control of the energy of a storage battery (1) feeding an electric traction motor (2) of a vehicle controlled by a power or regulation circuit (3) such as a chopper circuit comprising a device (4) for the measurement of charging and discharging currents of the storage battery (1) and the determination from the measured currents of the amount of electricity stored in the storage battery (1) and a display device (5) similar to a fuel gauge, the measuring device (4) which moreover comprises a circuit (14) permanently measuring the voltage (vb) of the storage battery (1) being adapted to determine at each moment the amount of available energy and to display it and also for determining at each moment the actual distance remaining to be covered without any recharge of the storage battery and for displaying it, characterized in that in the initial conditions, the measuring and determining device (4) also determines the amount of energy necessary to cover a set path of travel chosen by the driver and which is visualized at the display device (5), compares this amount of energy to the amount of energy stored in the storage battery (1) and operates the regulation circuit (3) of the electric motor (2) so as to limit the power supplied to the electric motor (2) to a determined level when the required amount of energy is relatively close to the stored amount of energy.

2. System according to claim 1, characterized in that the aforesaid measuring and determining device (4) comprises a microprocessor (6) connected to the aforesaid display device (5) and two integrating circuits (7, 8), the one (7) for the storage battery charging current and the other one (8) for the storage battery discharging current, connected to three inputs (e1, e2, e4), respectively, of the microprocessor (6) which stores at variable intervals the output values of the integrating circuits (7, 8) which are then re-initialized, the microprocessor capitalizing at the end of a certain time (tn) the stored values for determining the actually available amount of energy of the storage battery (1).

3. System according to claim 2, characterized in that it comprises a control keyboard (13) connected to the microprocessor (6) and permitting to transmit to the latter the value of the set path of travel which is stored in the microprocessor (6) which operates the display device (5) to visualize a limited or not limited power value to be supplied to the electric motor (2) according to the value of the set path of travel and which is enabled by the driver with the assistance of the control keyboard (13).

4. System according to claim 2 or 3, characterized in that it comprises a vehicle speed sensor (16) connected through a shaping circuit to a counting input of the microprocessor (6).

5. System according to one of claims 2 to 4, characterized in that the device for measuring of the voltage (Vb) of the storage battery is connected through a circuit (14) to an analog input (e3) of the microprocessor (6).

6. System according to one of claims 2 to 5, characterized in that the values of the charging and discharging currents are measured from a shunt resistance (9) connected in series with the storage battery (1) and the corresponding voltage values of which are transmitted to both integrating circuits (7, 8) through a circuit (11) for the amplification and a circuit (12) for the separation of the positive and negative voltage components.

7. System according to one of the foregoing claims, characterized in that the display device (5) comprises two lines or series of lights (5a, 5b) located on the dashboard of the vehicle and respectively visualizing the amount of energy stored in the storage battery (1) and the amount of energy necessary for completing the aforesaid selected set path of travel.

8. System according to one of claims 2 to 7, characterized in that the microprocessor (6) has two (e2, e4) of its inputs which correspond to both inputs, respectively, of two analog-digital converters of the microprocessor (6) connected at the output of the integrating circuit (8) and is adapted to retain that

7

EP 0 537 081 B1

output value of the integrating circuit (8) which is the highest one of both output values taken.

**Patentansprüche**

1.  System zur Kontrolle der Energie eines Stromsammlers (1) zur Speisung eines elektrischen Fahrmotors (2) eines Fahrzeugs, der durch einen Leistungs- bzw. Regelungsschaltkreis (3) wie einen Zerhackerschaltkreis gesteuert wird, mit einer Vorrichtung (4) zur Messung von Lade- und Entladeströme des Stromsammlers (1) und zur Bestimmung, aus den gemessenen Strömen, der in dem Stromsammler (1) gespeicherten Elektrizitätsmenge und einer einem Kraftstoffstandsmesser ähnlichen Sichtanzeigevorrichtung (5), wobei die Messvorrichtung (4), die ausserdem einen die Spannung (vb) des Stromsammlers (1) ständig messenden Schaltkreis (14) aufweist, geeignet ist, um an jedem Zeitpunkt die verfügbare Energiemenge zu bestimmen und anzuzeigen und auch um zu jedem Zeitpunkt die verbleibende ohne Nachladung des Stromsammlers zurückzulegende tatsächlich Streckenlänge zu bestimmen und anzuzeigen, dadurch gekennzeichnet, dass unter Anfangsbedingungen die Mess- und bestimmungsvorrichtung (4) auch die zum Zurücklegen einer durch den Fahrer gewählten Sollstrecke notwendige Energiemenge bestimmt, die an der Sichtanzeigevorrichtung (5) sichtbar gemacht wird, diese Energiemenge mit der in dem Stromsammler (1) gespeicherten Energiemenge vergleicht und den Regelschaltkreis (3) des elektrischen Motors (2) derart steuert, um die dem elektrischen Motor (2) gelieferte Leistung auf einem bestimmten Pegel zu beschränken, wenn die erforderliche Energiemenge der gespeicherten Energiemenge verhältnismässig nahe kommt.

2.  System nach Anspruch 1, dadurch gekennzeichnet, dass die vorgenannte Mess- und bestimmungsvorrichtung (4) einen an die vorgenannte Sichtanzeigevorrichtung (5) angeschlossenen Mikroprozessor (6) und zwei Integrierungsschaltkreise (7, 8), der eine (7) zur Integrierung des Ladestromes des Stromsammlers und der andere (8) zur Integrierung des Entladestromes des Stromsammlers, umfasst, welche Stromkreise jeweils an drei Eingänge (e1, e2, e4) des Mikroprozessors (6) angeschlossen sind, der in veränderlichen Zeitabständen die Ausgangswerte der Integrierungschaltungen (7, 8), die dann wieder initialisiert werden, speichert, wobei der Mikroprozessor am Ende einer gewissen Zeit (tn) die gespeicherten Werte kapitalisiert, um die tatsächlich verfügbare Energiemenge des Stromsammlers (1) festzustellen.

3.  System nach Anspruch 2, dadurch gekennzeichnet, dass es eine mit dem Mikroprozessor (6) verbundene Kontrolltastatur (13) umfasst, welche es gestattet, an diesen den Wert der Sollstrecke, die in dem Mikroprozessor (6) gespeichert ist, zu übertragen, welcher Mikroprozessor die Sichtanzeigevorrichtung (5) betätigt, um einen begrenzten oder nicht begrenzten Leistungswert sichtbar zu machen, der dem elektrischen Motor (2) gemäss dem Wert der Sollstrecke zu liefern ist und der durch den Fahrer mit Hilfe der Kontrolltastatur (13) gültig gemacht wird.

4.  System nach Anspruch 2 oder 3, dadurch gekennzeichnet, dass es einen durch einen Formgebungsschaltkreis mit einem Zählungseingang des Mikroprozessors (6) verbundenen Meßwertgeber (16) des Fahrzeuges aufweist.

5.  System nach einem der Ansprüche 2 bis 4, dadurch gekennzeichnet, dass die Vorrichtung zum Messen der Spannung (Vb) des Stromsammlers durch einen Schaltkreis (14) mit einem Analogeingang (e3) des Mikroprozessors (6) verbunden ist.

6.  System nach einem der Ansprüche 2 bis 5, dadurch gekennzeichnet, dass die Werte des Lade- und Entladestromes aus einem mit dem Stromsammler (1) in Reihe geschalteten Nebenschlusswiderstand (9) gemessen werden, dessen entsprechende Spannungswerte an die beiden Integrierungschaltkreisen (7, 8) durch einen Schaltkreis (11) zur Verstärkung und einen Schaltkreis (12) zur Trennung der positiven und negativen Spannungskomponenten übertragen werden.

7.  System nach einem der vorangehenden Ansprüche, dadurch gekennzeichnet, dass die Sichtanzeigevorichtung (5) zwei an der Armaturentafel des Fahrzeuges gelegene Linien bzw. Reihen von Leuchten (5a, 5b) aufweist, die jeweils die in dem Stromsammler (1) gespeicherte Energiemenge und die zur Beendung der vorgenannten gewählten Sollstrecke notwendige Energiemenge sichtbar macht.

8

8. System nach einem der Ansprüche 2 bis 7, dadurch gekennzeichnet, dass der Mikroprozessor (6) von seinen Eingängen zwei Eingänge (e2, e4), die jeweils den beiden Eingängen von zwei Analog-Digital-Wandern des Mikroprozessors (6) entsprechen, am Ausgang des Integrierungsschaltkreises (8) angeschlossen sind und er geeignet ist, denjenigen Ausgangswert des Integrierungsschaltkreises (8), der der höchste der beiden entnommenen Ausgangswerten ist, zurückzubehalten.

Fig.1

12 volts

12 volts

4.

5.

13.

EP 0 537 081 B1

Fig. 4

EP 0 537 081 B1